# EUROPEAN PATENT APPLICATION

(11) **EP 4 593 186 A1**
(43) Date of publication of application: **30.07.2025**
(21) Application number: 24217669.1
(22) Date of filing: 05.12.2024
(51) Int. Cl.: H01M 50/471, H01M 10/04, H01M 10/0587

(54) **ELECTRODE ASSEMBLY OF RECHARGEABLE BATTERY**

(30) Priority: 29.01.2024 KR 20240013292
(71) Applicant: SAMSUNG SDI CO., LTD., Yongin-si, Gyeonggi-do 17084 (KR)
(72) Inventor: PARK, Yeonjin, 17084 Yongin-si (KR); PARK, Junghyun, 17084 Yongin-si (KR); KIM, Kyoungtae, 17084 Yongin-si (KR); KIM, Junghyun, 17084 Yongin-si (KR); LEE, Sungjun, 17084 Yongin-si (KR); LEE, Jungsu, 17084 Yongin-si (KR); KIM, Soyeon, 17084 Yongin-si (KR); CHO, Youngjae, 17084 Yongin-si (KR); KIM, Joungku, 17084 Yongin-si (KR); KIM, Dokyung, 17084 Yongin-si (KR)
(74) Representative: Marks & Clerk LLP

(57) **Abstract**

An electrode assembly of a rechargeable battery includes an electrode plate of a positive electrode and a negative electrode on both surfaces of a separator. The electrode plate may include an electrode substrate, a first active material layer on a first surface of the electrode substrate, a second active material layer on a second surface of the electrode substrate, At least one of the electrode plates includes a first lamination tape and a second lamination tape attached to the first active material layer, an end portion of the electrode substrate, and the second active material. The first lamination tape forms a first attachment portion, the second lamination tape forms a second attachment portion, and an end of the first attachment portion on the first active material layer and an end of the second attachment portion on the second active material layer are spaced apart from each other in a winding direction.

## Description

### BACKGROUND

### 1. Field

The present disclosure relates to an electrode assembly of a rechargeable battery including a lamination tape.

### 2. Description of the Related Art

A rechargeable battery is a battery that is capable of being repeatedly charged and discharged, unlike a primary battery. A small-capacity rechargeable battery is used in a portable small electronic device such as a mobile phone, a laptop computer, and a camcorder. A large-capacity and high-density rechargeable battery is used for a power source or energy storage for driving a motor of a hybrid vehicle or an electric vehicle.

A rechargeable battery includes an electrode assembly for charging and discharging current, a case or pouch accommodating the electrode assembly and an electrolyte, and an electrode terminal connected to the electrode assembly and drawn out of the case or pouch.

The electrode assembly may be formed as a jelly-roll type formed by winding an electrode plate and a separator. This winding process is a process of producing a jelly roll by winding a negative electrode substrate, positive electrode substrate, and separator during the production of a cylindrical rechargeable battery.

If contact between the positive electrode and negative electrode substrates occurs in a rechargeable battery, there is a possibility of a short circuit and ignition. Accordingly, in order to prevent ignition due to contact between the positive electrode substrate and the negative electrode substrate, the substrate is cut and a lamination tape is attached to the end. Attaching this lamination tape is included in the winding process of the rechargeable battery.

In the lamination tape process, the lamination tape is attached to the front and end sections of a jelly roll, and then the lamination tape is cut to create a pattern. The lamination tape is configured to prevent a short circuit from occurring due to deformation of the front end of the positive electrode.

The above information disclosed in this Background section is only for enhancement of understanding of the background of the invention and therefore it may contain information that does not constitute prior art.

### SUMMARY

The present disclosure relates to various embodiments of an electrode assembly of a rechargeable battery capable of preventing a short circuit due to deformation of a positive electrode substrate and a negative electrode substrate. The present disclosure also relates to various embodiments of an electrode assembly of a rechargeable battery configured to reduce the likelihood of a crack developing at a positive electrode substrate and/or a negative electrode substrate due to the thickness of a lamination tape.

An electrode assembly of a rechargeable battery includes an electrode plate of a positive electrode, an electrode plate of a negative electrode, and a separator between the electrode plate of the positive electrode and the electrode plate of the negative electrode. Each of the electrode plates may comprise: an electrode substrate; a first active material layer on a first surface of the electrode substrate; and a second active material layer on a second surface of the electrode substrate. At least one of the electrode plate of the positive electrode and the electrode plate of the negative electrode may further comprise lamination tapes attached to the first active material layer, an end portion of the electrode substrate, and the second active material layer. The lamination tapes may form attachment portions located on the first active material layer and the second active material layer, respectively, in a wound central portion of the electrode assembly, and an end of the attachment portion on the first active material layer and an end of the attachment portion on the second active material layer may be spaced apart from each other in a winding direction of the electrode assembly.

The electrode substrate, the first active material layer, and the second active material layer may be the positive electrode, and the first attachment portion may be longer than the second attachment portion by a first length.

The electrode substrate may further include an uncoated portion, the first lamination tape and the second lamination tape may be attached to the uncoated portion, and may include a first extension attachment portion extending from an end portion of the uncoated portion, and the first extension attachment portion may not correspond to an end portion of the first active material layer of the negative electrode.

The first extension attachment portion and the first length may be on opposite sides of the electrode assembly in a diameter direction.

The electrode substrate, the first active material layer, and the second active material layer may be the negative electrode, and the third attachment portion may be shorter than the fourth attachment portion by a second length.

The electrode substrate may further include an uncoated portion, and the first lamination tape and the second lamination tape may be attached to the uncoated portion, and may include a second extension attachment portion extending from an end portion of the uncoated portion.

The second extension attachment portion and the second length may be on opposite sides of the electrode assembly in a diameter direction.

The electrode substrate, the first active material layer, and the second active material layer may be the positive electrode, the first attachment portion may be longer than the second attachment portion by a first length, the electrode substrate, the first active material layer, and the first active material layer may be the negative electrode, and the third attachment portion may be shorter than the fourth attachment portion by a second length.

The electrode substrate of the negative electrode may further include an uncoated portion, the first lamination tape and the second lamination tape of the negative electrode may be attached to the uncoated portion of the electrode substrate of the negative electrode, and include a second extension attachment portion extending from an end portion of the uncoated portion of the electrode substrate of the negative electrode, the second extension attachment portion and the first length may be on opposite sides of the electrode assembly in a diameter direction, the electrode substrate of the positive electrode may further include an uncoated portion, the first lamination tape and the second lamination tape may be attached to the uncoated portion, and may include a first extension attachment portion extending from the end portion of the uncoated portion, and the first extension attachment portion and the second length may be on opposite sides of the electrode assembly in the diameter direction.

The electrode substrate, the first active material layer and the second active material layer may be the positive electrode, and have the same cross-section, and the first attachment portion may be longer than the second attachment portion by an eleventh length.

The first lamination tape and the second lamination tape may be attached to each other and further include a first extension attachment portion extending from an end portion of the first active material layer and the second active material layer, and the first extension attachment portion and the eleventh length may be on opposite sides of the electrode assembly in a diameter direction.

The electrode substrate, the first active material layer, and the second active material layer may be the negative electrode, and have the same cross-section, and the third attachment portion may be shorter than the fourth attachment portion by a twelfth length.

The first lamination tape and the second lamination tape may further include a second extension attachment portion extending from an end portion of the first active material layer and the second active material layer, and the second extension attachment portion and the twelfth length may be on opposite sides of the electrode assembly in a diameter direction

The electrode substrate, the first active material layer, and the second active material layer may be the positive electrode, and have the same cross-section, the first attachment portion may be longer than the second attachment portion by an eleventh length, the electrode substrate, the first active material layer, and the first active material layer may be the negative electrode, and have the same cross-section, and the third attachment portion may be shorter than the fourth attachment portion by a twelfth length.

The first lamination tape and the second lamination tape of the positive electrode may further include a first extension attachment portion extending from an end portion of the first active material layer and the second active material layer, the first extension attachment portion and the eleventh length may be on opposite sides of the electrode assembly in a diameter direction, the first lamination tape and the second lamination tape of the negative electrode may further include a second extension attachment portion extending from an end portion of the first active material layer and the second active material layer, and the second extension attachment portion and the twelfth length may be on opposite sides of the electrode assembly in the diameter direction.

At least some of the above and other features of the invention are set out in the claims.

According to an embodiment, because an end of first attachment portion and an end of second attachment portion of first and second lamination tapes are spaced apart from each other in the winding direction, a short circuit due to deformation of a positive electrode substrate and a negative electrode substrate may be prevented (or at least mitigated).

According to an embodiment, when preventing a short circuit by the first and second lamination tapes, the length difference of the first and second lamination tapes may minimize (or at least reduce) a thickness difference caused in the winding diameter direction, and accordingly, may prevent (or at least mitigate) the occurrence of cracks in first and second active material layers of the electrode assembly after winding.

### BRIEF DESCRIPTION OF THE DRAWINGS

The present disclosure will be described more fully hereinafter with reference to the accompanying drawings, in which embodiments of the invention are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.
FIG. 1 is a perspective view of an electrode assembly of a rechargeable battery according to a first embodiment of the present disclosure.
FIG. 2 is a cross-sectional view of an electrode plate applied to FIG. 1 before cutting.
FIG. 3 is a cross-sectional view during a process of attaching and cutting first and second lamination tapes on an electrode plate.
FIG. 4 is a cross-sectional view in a state in which first and second lamination tapes in FIG. 3 are cut.
FIG. 5 is a cross-sectional view in a state that first and second lamination tapes are attached to an electrode plate applied to an electrode assembly of a rechargeable battery according to a second embodiment of the present disclosure.
FIG. 6 is a cross-sectional view during a process of attaching and cutting first and second lamination tapes on an electrode plate applied to an electrode assembly of a rechargeable battery according to a third embodiment of the present disclosure.
FIG. 7 is a cross-sectional view in a state in which first and second lamination tapes in FIG. 6 are cut.
FIG. 8 is a perspective view of an electrode assembly of a rechargeable battery according to a fourth embodiment of the present disclosure.
FIG. 9 is a partial cross-sectional view of the electrode assembly of FIG. 8.
FIG. 10 is a partial cross-sectional view of an electrode assembly of a rechargeable battery according to a fifth embodiment of the present disclosure.
FIG. 11 is a partial cross-sectional view of an electrode assembly of a rechargeable battery according to a sixth embodiment of the present disclosure.
FIG. 12 is a partial cross-sectional view of an electrode assembly of a rechargeable battery according to a seventh embodiment of the present disclosure.
FIG. 13 is a partial cross-sectional view of an electrode assembly of a rechargeable battery according to an eighth embodiment of the present disclosure.
FIG. 14 is a partial cross-sectional view of an electrode assembly of a rechargeable battery according to a ninth embodiment of the present disclosure.

### DETAILED DESCRIPTION

### Electrode assembly of type A

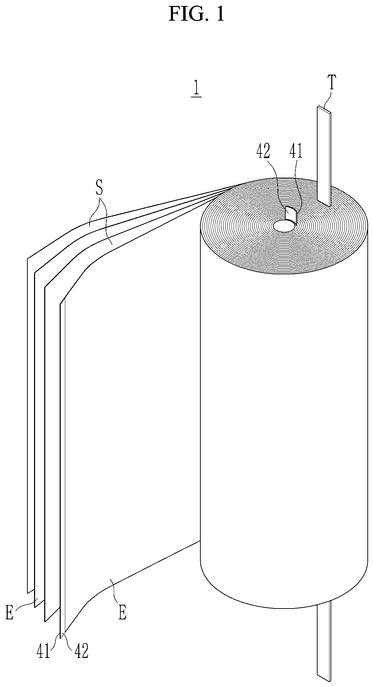

FIG. 1 is a perspective view of an electrode assembly of a rechargeable battery according to a first embodiment of the present disclosure. Referring to FIG. 1, an electrode assembly 1 of a rechargeable battery of the first embodiment is configured to charge and discharge, and may be formed in a jelly roll type by stacking and winding two sheets of separators S and an electrode plate E of a negative electrode and an electrode plate E of a positive electrode.

In one or more embodiments, the electrode assembly is accommodated in a case together with an electrolyte solution, an opening of the case is closed and sealed by a cap plate, and an electrode terminal is drawn out of the cap plate, thereby forming a rechargeable battery.

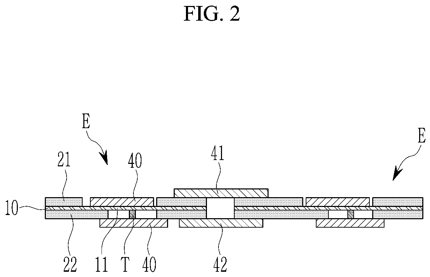

In one or more embodiments, the electrode plate E of the positive electrode may be formed by coating a positive active material on both surfaces of an electrode substrate 10 (see FIG. 2) formed as an aluminum (Al) foil, and the electrode plate E of the negative electrode may be formed by coating a negative active material on both surfaces of the electrode substrate 10 formed as a copper (Cu) foil.

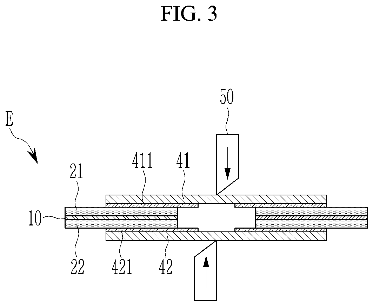

FIG. 2 is a cross-sectional view of an electrode plate applied to FIG. 1 before cutting. FIG. 3 is a cross-sectional view during a process of attaching and cutting first and second lamination tapes on an electrode plate.

Referring to FIG. 1 to FIG. 3, the electrode plate E may include a first active material layer 21 and a second active material layer 22 on opposite surfaces of the electrode substrate 10, which is a thin metal plate. The electrode substrate 10 may include, in a wound state, a first surface located on an outer side in a diameter or radial direction and a second surface located on an inner side in the diameter or radial direction. The first active material layer 21 may be formed on the first surface, and the second active material layer 22 may be formed on the second surface.

In addition, the electrode plate E may include an uncoated portion 11 that is not applied with the first and second active material layers 21 and 22 thereby exposing the electrode substrate 10 along a winding direction. The uncoated portion 11 of the electrode plate E may be formed at a starting point and an end point of the winding direction of the electrode assembly and in the middle of both ends, but in the first embodiment, the uncoated portions are formed at a center of both ends.

A tab T of the negative electrode and the positive electrode is connected to the uncoated portion 11 of the electrode substrate 10. The tab T of the negative electrode and the positive electrode may be drawn out through at least first side of both ends of a winding axis direction of the electrode assembly, and in the present embodiment, drawn out through both ends of the winding axis direction. The uncoated portion 11 and the tab T are insulated by a lamination tape 40.

The electrode plate E may include a first lamination tape 41 and a second lamination tape 42 attached to the starting point and the end point of the winding direction. In one or more embodiments, the first lamination tape 41 is attached to an end portion of the first active material layer 21 by a first adhesive layer 411 (see FIG. 3). The second lamination tape 42 is attached to an end portion of the second active material layer 22 by a second adhesive layer 421 (see FIG. 3).

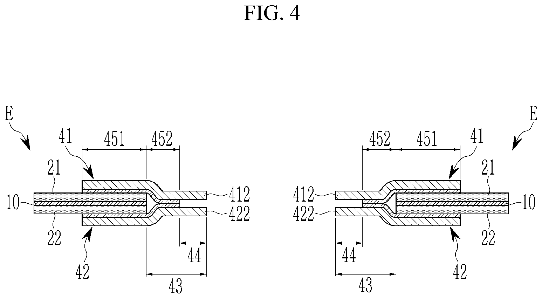

FIG. 4 is a cross-sectional view depicting a configuration in which first and second lamination tapes 41 and 42 in FIG. 3 are cut. Referring to FIG. 4, the first lamination tape 41 and the second lamination tape 42 may be attached to each other at cross-section outer boundaries of the first and second active material layers 21 and 22 and the electrode substrate 10.

In one or more embodiments, the first and second lamination tapes 41 and 42 attached to each other may further include a protruding portion 43 (i.e., 412 or 422, respectively) protruding more than an end portion of the electrode substrate 10. The protruding portion 43 (i.e., 412 or 422) of the first and second lamination tapes 41 and 42 may prevent short circuit due to deformation of the electrode substrate 10.

In addition, in one or more embodiments, the first and second lamination tapes 41 and 42 may further include first non-adhesive portions 44 separated from each other at outer boundaries of the first active material layer 21 and the second active material layer 22. As such, the first non-adhesive portion 44 of the first and second lamination tapes 41 and 42 may prevent a short circuit according to deformation of the electrode substrate 10 due to the first and second adhesive layers 411 and 421.

The first non-adhesive portion 44 may be cut by a knife 50 to form two different electrode plates E. Two electrode plates E may be manufactured by one cutting process, and the first non-adhesive portion 44 may be provided (located) on a first side of each electrode plate E.

In the first embodiment, the electrode substrate 10, the first active material layer 21, and the second active material layer 22 may form a cross-section at the same location. The first adhesive layer 411 of the first lamination tape 41 and the second adhesive layer 421 of the second lamination tape 42 may form a main adhesive portion 451 on the first active material layer 21 and the second active material layer 22, and may further form an outer boundary adhesive portion 452 at cross-sectional outer boundaries of the first active material layer 21 and the second active material layer 22 and be attached to each other.

The first non-adhesive portion 44 formed as the first lamination tape 41 and the second lamination tape 42 may be formed separate from each other at an outer side of the outer boundary adhesive portion 452. As such, due to the first non-adhesive portion 44 of the first and second lamination tapes 41 and 42, the first and second adhesive layers 411 and 421 may be minimized, and accordingly, the life-span of the knife 50 for cutting first and second lamination tapes 41 and 42 may be extended (i.e., the knife does not pierce the adhesive portion 451 and 452, which extends the service life of the knife 50).

Hereinafter, embodiments of the present disclosure will be described. Compared to the first embodiment, the description of the same configuration is omitted and the description of the different configuration is described.

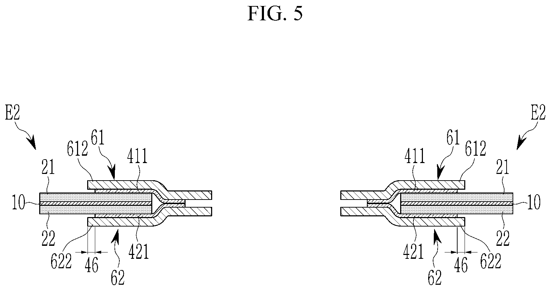

FIG. 5 is a cross-sectional view depicting first and second lamination tapes attached to an electrode plate applied to the electrode assembly of a rechargeable battery according to a second embodiment of the present disclosure. Referring to FIG. 5, in an electrode plate E2 of the electrode assembly of a rechargeable battery according to second embodiment, a first lamination tape 61 and a second lamination tape 62 may form second non-adhesive portions 46 (i.e., 612 or 622, respectively) separated from each other on the first active material layer 21 and the second active material layer 22.

The second non-adhesive portion 46 (i.e., 612 or 622) of the first and second lamination tapes 61 and 62 may prevent the occurrence of crack at ends of the first and second lamination tapes 61 and 62 during charging and discharging of the rechargeable battery.

That is, since the electrode plate E2 is thickened due to the first and second adhesive layers 411 and 421, an internal stress is generated at a starting point and an end point of the electrode plate E2 during winding, thereby possibly causing a crack, and since the electrode plate E2 is fixed by the first and second adhesive layers 411 and 421, movement of the first and second active material layers 21 and 22 is restricted or prevented, thereby possibly causing a crack.

However, the second non-adhesive portion 46 (i.e., 612 or 622) from which the first and second adhesive layers 411 and 421 is removed or omitted may reduce the internal stress at the end points of the first and second lamination tapes 61 and 62, and enable relative movement with respect to the first and second active material layers 21 and 22, and accordingly, the active material layer may not be stretched, thereby preventing occurrence of a crack.

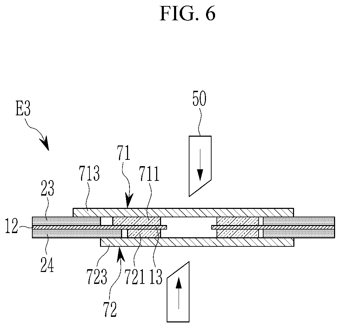

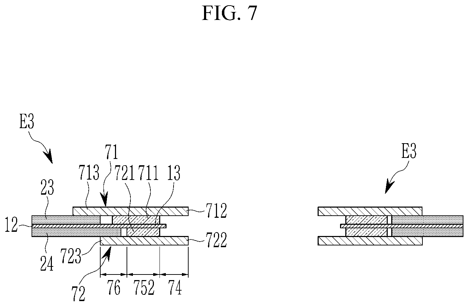

FIG. 6 is a cross-sectional view during a process of attaching and cutting first and second lamination tapes on an electrode plate applied to the electrode assembly of a rechargeable battery according to a third embodiment of the present disclosure. FIG. 7 is a cross-sectional view in a state in which first and second lamination tapes in FIG. 6 are cut.

Referring to FIG. 6 and FIG. 7, in an electrode plate E3 of the electrode assembly of a rechargeable battery according to a third embodiment, an electrode substrate 12 may extend beyond a first active material layer 23 and a second active material layer 24 on the electrode substrate 12. Accordingly, the electrode substrate 12 may include an uncoated portion 13.

The first active material layer 23 may be formed on the first surface of the electrode substrate 12, except along the uncoated portion 13, and the second active material layer 24 may be formed on the second surface of the electrode substrate 12, except along the uncoated portion 13. The first active material layer 23 and the second active material layer 24 may be offset from each other in cross-section. In one or more embodiments, the uncoated portion 13 is formed shorter on the second surface than on the first surface.

A first lamination tape 71 may be attached to the first surface of the electrode substrate 12 by a first adhesive layer 711, and a second lamination tape 72 may be attached to the second surface of the electrode substrate 12 by a second adhesive layer 721.

In addition, first and second lamination tapes 71 and 72 may further include third non-adhesive portions 74 (i.e., 712 or 722, respectively) separated from each other at outer boundaries of the first active material layer 23 and the second active material layer 24. As such, the third non-adhesive portion 74 (i.e., 712 or 722) of the first and second lamination tapes 71 and 72 may prevent (or at least mitigate against) a crack defect in the electrode substrate 12 due to first and second adhesive layers 711 and 721.

The third non-adhesive portion 74 (i.e., 712 or 722) may be cut by the knife 50 to form two different electrode plates E3. Two electrode plates E3 may be manufactured by one cutting process, and the third non-adhesive portion 74 (i.e., 712 or 722) may be provided to a first side of each electrode plate E3.

The third non-adhesive portion 74 (i.e., 712 or 722) formed as the first lamination tape 71 and the second lamination tape 72 may be separate from each other at an outer side of an adhesive portion 752. In one or more embodiments, the adhesive portion 752 may have a different cross-section from the first and second active material layers 23 and 24 due to the first and second adhesive layers 711 and 721, but the present disclosure is not limited thereto.

As such, due to the third non-adhesive portion 74 (i.e., 712 or 722) of the first and second lamination tapes 71 and 72, the first and second adhesive layers 711 and 721 may be minimized (or at least reduced), and accordingly, the life-span of the knife 50 for cutting first and second lamination tapes 71 and 72 may be extended.

The first lamination tape 71 and the second lamination tape 72 may form fourth non-adhesive portions 76 (i.e., 713 or 723) separated from each other on the first active material layer 23 and the second active material layer 24.

The fourth non-adhesive portion 76 (i.e., 713 or 723) of the first and second lamination tapes 71 and 72 may decrease the occurrence of cracks by decreasing the curvature of winding of the electrode assembly by decreasing the thickness of the starting point and the end point of the electrode assembly, and accordingly, may prevent (or at least mitigate) the occurrence of crack at ends of the first and second lamination tapes 71 and 72 during charging and discharging of the rechargeable battery.

That is, since the electrode plate E3 is thickened due to the first and second adhesive layers 711 and 721, an internal stress is generated at a starting point and an end point of the electrode plate E3 during winding, thereby possibly causing a crack, and since the electrode plate E3 is fixed by the first and second adhesive layers 711 and 721, movement of the first and second active material layers 23 and 24 is restricted or prevented, thereby possibly causing a crack.

However, the fourth non-adhesive portion 76 (i.e., 713 or 723) from which the first and second adhesive layers 711 and 721 is removed or omitted may reduce the internal stress at the ends of the first and second lamination tapes 71 and 72, and enable relative movement with respect to the first and second active material layers 23 and 24, and accordingly, the active material layer may not be stretched, thereby preventing occurrence of a crack.

### Electrode assembly of type B

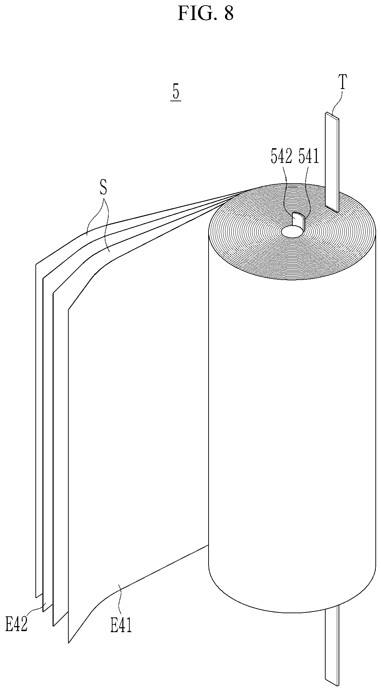

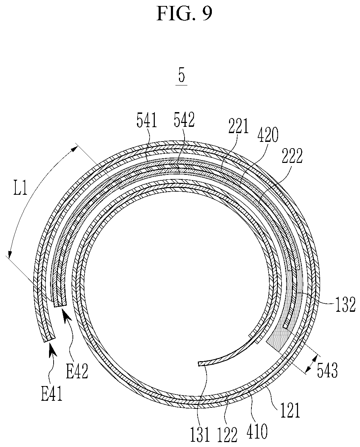

FIG. 8 is a perspective view of the electrode assembly of a rechargeable battery according to a fourth embodiment of the present disclosure. FIG. 9 is a partial cross-sectional view of the electrode assembly of FIG. 8. Referring to FIG. 8 and FIG. 9, the electrode assembly 5 of a rechargeable battery of the fourth embodiment is configured to charge and discharge, and may be formed in a jelly roll type by stacking and winding two sheets of separators S and electrode plates of a negative electrode E41 and a positive electrode E42. For convenience, the separator S is omitted in FIG. 9.

The electrode assembly is accommodated in a case together with an electrolyte solution, an opening of the case is closed and sealed by a cap plate, and an electrode terminal is drawn out of the cap plate, thereby forming a rechargeable battery.

In one or more embodiments, an electrode plate of the positive electrode E42 may be formed by coating the positive active material on both surfaces of an electrode substrate 420 that is formed as an aluminum (Al) foil. In addition, an electrode plate of the negative electrode E41 may be formed by coating the negative active material on both surfaces of an electrode substrate 410 that is formed as a copper (Cu) foil.

Electrode plates of the negative electrode E41 and the positive electrode E42 may include first active material layers 121 and 221, respectively, and second active material layers 122 and 222, respectively, in which an active material is applied to both surfaces of the electrode substrates 410 and 420, respectively, that are formed as a thin metal plate.

In the negative electrode E41 and the positive electrode E42, the electrode substrates 410 and 420, respectively, may include, in a wound state, a first surface located on an outer side in the diameter or radial direction and a second surface located on an inner side in the diameter or radial direction. The first active material layers 121 and 221 may be formed on the first surface, and the second active material layers 122 and 222 may be formed on the second surface of the respective electrode substrates 410 and 420, respectively.

In addition, electrode plates of the negative electrode E41 and the positive electrode E42 may include uncoated portions 131 and 132, respectively, that is not applied with the first active material layers 121 and 221 or the second active material layers 122 and 222, thereby exposing the electrode substrates 410 and 420 along the winding direction. The uncoated portions 131 and 132 of the negative electrode E41 and the positive electrode E42, respectively, may be formed at the starting point and the end point of the winding direction of the electrode assembly and in the middle of both ends, but in the fourth embodiment, the uncoated portions 131 and 132 are formed at the starting point of the winding direction.

In the fourth embodiment, the electrode plate of the positive electrode E42 may include a first lamination tape 541 and a second lamination tape 542 attached to a starting point of the winding direction. That is, the first lamination tape 541 may be attached to the first surface of an uncoated portion 132 at an end portion of a first active material layer 221. The second lamination tape 542 may be attached to the second surface of the uncoated portion 132 at an end portion of a second active material layer 222.

The first and second lamination tapes 541 and 542 attached to the first and second surface, respectively, of the uncoated portion 132 may prevent a short circuit due to deformation of the electrode substrates 410 and 420 of the negative electrode E41 and the positive electrode E42.

The first lamination tape 541 may form a first attachment portion (external layer portion) located on the first active material layer 221 in a wound central portion of the electrode assembly 5, and the second lamination tape 542 may form a second attachment portion (internal layer portion) located on the second active material layer 222. The first active material layer 221 is located outward in a radial direction and the second active material layer 222 is located inward in a radial direction.

An end of the first attachment portion on the first active material layer 221 formed by the first lamination tape 541 and an end of the second attachment portion on the second active material layer 222 formed by the second lamination tape 542 are spaced apart from each other. The first attachment portion (i.e., outer side) formed by the first lamination tape 541 is longer than the second attachment portion (i.e., inner side) formed by the second lamination tape 542 by a first length L1 (an arcuate length in the wound direction).

A difference of the first length L1 may minimize a thickness difference in the diameter direction following the winding due to the first and second lamination tapes 541 and 542, and accordingly, may prevent (or at least mitigate) the occurrence of cracks in the first and second active material layers 221 and 222 of the electrode assembly 5 after winding.

The first lamination tape 541 and the second lamination tape 542 may be attached to the first and second surfaces of the uncoated portion 132, respectively, and further include a first extension attachment portion 543 attached to the first and second lamination tapes 541, 542 by further extending from an end portion of the uncoated portion 132. The first extension attachment portion 543 may further prevent (or mitigate) a short circuit according to deformation of the electrode substrates 410 and 420 of the negative electrode E41 and the positive electrode E42. The first extension attachment portion 543 does not correspond to an end portion of the first active material layer 121 of the negative electrode E41, and accordingly, may prevent (or at least mitigate) the occurrence of cracks of the first active material layer 121 that may be caused by the first extension attachment portion 543.

In addition, the first extension attachment portion 543 and the first length L1 may be on opposite sides of the electrode assembly 5 in the diameter direction and accordingly, the occurrence of cracks due to the thickness difference may be further prevented.

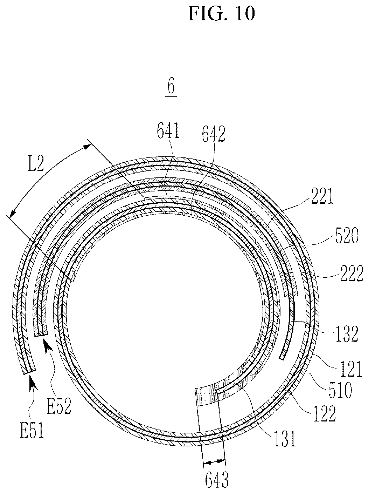

FIG. 10 is a partial cross-sectional view of the electrode assembly of a rechargeable battery according to a fifth embodiment of the present disclosure. Referring to FIG. 10, in the electrode assembly 6 of a rechargeable battery of the fifth embodiment, an electrode plate of a negative electrode E51 may include a first lamination tape 641 and a second lamination tape 642 attached to the starting point of the winding direction. That is, the first lamination tape 641 may be attached to the first surface of the uncoated portion 131 at the end portion of the first active material layer 121. The second lamination tape 642 may be attached to the second surface of the uncoated portion 131 at an end portion of the second active material layer 122.

First and second lamination tapes 641 and 642 attached to the first and second surfaces, respectively, of the uncoated portion 131 may prevent a short circuit according to deformation of electrode substrates 510 and 520 of the negative electrode E51 and the positive electrode E52.

The first lamination tape 641 may form the first attachment portion (external layer portion) located on the first active material layer 121 in a wound central portion of the electrode assembly 6, and the second lamination tape 642 may form the second attachment portion (internal layer portion) located on the second active material layer 122. The first lamination tape 641 is located outward in a radial direction and the second lamination tape 642 is located inward in a radial direction.

The end of the first attachment portion on the first active material layer 121 formed by the first lamination tape 641 and the end of the second attachment portion on the second active material layer 122 formed by the second lamination tape 642 are spaced apart from each other. The first attachment portion (i.e., outer side) formed by the first lamination tape 641 may be shorter than the second attachment portion (i.e., inner side) formed by the second lamination tape 642 by a second length L2.

A difference of the second length L2 may minimize (or at least reduce) a thickness difference in the diameter direction following winding due to the first and second lamination tapes 641 and 642, and accordingly, may prevent (or at least mitigate) the occurrence of cracks in the first and second active material layers 121 and 122 of the electrode assembly 6 after winding.

The first lamination tape 641 and the second lamination tape 642 may be attached to the first and second surfaces of the uncoated portion 131, respectively, and further include a second extension attachment portion 643 attached to the first and second lamination tapes 641 and 642 by further extending from an end portion of the uncoated portion 131. The second extension attachment portion 643 may further prevent a short circuit according to deformation of the electrode substrates 510 and 520 of the negative electrode E51 and the positive electrode E52.

In addition, the second extension attachment portion 643 and the second length L2 may be on opposite sides of the electrode assembly 6 in the diameter direction and accordingly, the occurrence of cracks due to the thickness difference may be further prevented.

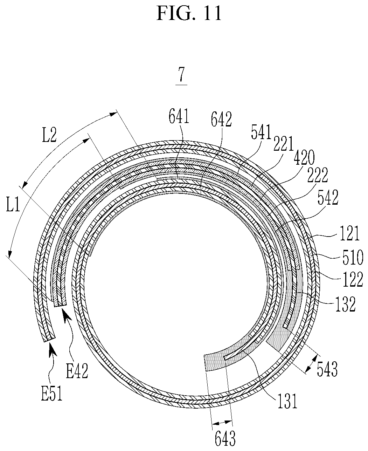

FIG. 11 is a partial cross-sectional view of the electrode assembly of a rechargeable battery according to a sixth embodiment of the present disclosure. Referring to FIG. 11, in the electrode assembly 7 of a rechargeable battery of the sixth embodiment, the electrode plate of the positive electrode E42 may include the first lamination tape 541 and the second lamination tape 542 attached to the starting point of the winding direction. That is, the first lamination tape 541 may be attached to the first surface of the uncoated portion 132 at the end portion of the first active material layer 221. The second lamination tape 542 may be attached to the second surface of the uncoated portion 132 at the end portion of the second active material layer 222.

The first and second lamination tapes 541 and 542 attached to the first and second surface of the uncoated portion 132, respectively, may prevent a short circuit according to deformation of electrode substrates 510 and 420 of the negative electrode E51 and the positive electrode E42.

The first lamination tape 541 may form the first attachment portion (external layer portion) located on the first active material layer 221 in a wound central portion of the electrode assembly 7, and the second lamination tape 542 may form the second attachment portion (internal layer portion) located on the second active material layer 222. The first lamination tape 541 is located outward in a radial direction and the second lamination tape 542 is located inward in a radial direction.

The end of the first attachment portion on the first active material layer 221 formed by the first lamination tape 541 and the end of the second attachment portion on the second active material layer 222 formed by the second lamination tape 542 are spaced apart from each other. The first attachment portion (i.e., outer side) formed by the first lamination tape 541 is longer than the second attachment portion (i.e., inner side) formed by the second lamination tape 542 by the first length L1.

The difference of the first length L1 may minimize (or at least reduce) a thickness difference in the diameter direction following winding due to the first and second lamination tapes 541 and 542, and accordingly, may prevent (or at least mitigate) the occurrence of cracks in the first and second active material layers 221 and 222 of the electrode assembly 7 after winding.

The first lamination tape 541 and the second lamination tape 542 may be attached to the first and second surfaces of the uncoated portion 132, respectively, and further include the first extension attachment portion 543 attached to the first and second lamination tapes 541 and 542 by further extending from the end portion of the uncoated portion 132. The first extension attachment portion 543 may further prevent (or mitigate) a short circuit according to deformation of the electrode substrates 510 and 420 of the negative electrode E51 and the positive electrode E42. The first extension attachment portion 543 does not corresponding to the end portion of the first active material layer 121 of the negative electrode E51, and accordingly, may prevent (or at least mitigate) the occurrence of cracks of the first active material layer 121 that may be caused by the first extension attachment portion 543.

In addition, the first extension attachment portion 543 and the first length L1 may be on opposite sides of the electrode assembly 7 in the diameter direction and accordingly, the occurrence of cracks due to the thickness difference may be further prevented (or mitigated).

The electrode plate of the negative electrode E51 may include the first lamination tape 641 and the second lamination tape 642 attached to the starting point of the winding direction. That is, the first lamination tape 641 may be attached to the first surface of the uncoated portion 131 at the end portion of the first active material layer 121. The second lamination tape 642 may be attached to the second surface of the uncoated portion 131 at the end portion of the second active material layer 122.

The first and second lamination tapes 641 and 642 attached to the first and second surface of the uncoated portion 131 may prevent (or at least mitigate) a short circuit according to deformation of the electrode substrates 510 and 420 of the negative electrode E51 and the positive electrode E42.

The first lamination tape 641 may form the first attachment portion (external layer portion) located on the first active material layer 121 in the wound central portion of the electrode assembly 7, and the second lamination tape 642 may form the second attachment portion (internal layer portion) located on the second active material layer 122. The first lamination tape 641 is located outward in a radial direction and the second lamination tape 642 is located inward in a radial direction.

The end of the first attachment portion on the first active material layer 121 formed by the first lamination tape 641 and the end of the second attachment portion on the second active material layer 122 formed by the second lamination tape 642 are spaced apart from each other. The first attachment portion (i.e., outer side) formed by the first lamination tape 641 is shorter than the second attachment portion (i.e., inner side) formed by the second lamination tape 642 by the second length L2.

The difference of the second length L2 may minimize (or at least reduce) a thickness difference in the diameter direction following winding due to the first and second lamination tapes 641 and 642, and accordingly, may prevent (or at least mitigate) the occurrence of cracks in the first and second active material layers 121 and 122 of the electrode assembly 7 after winding.

The first lamination tape 641 and the second lamination tape 642 may be attached to the first and second surfaces of the uncoated portion 131, respectively, and further include the second extension attachment portion 643 formed by being attached to the first and second lamination tapes 641 and 642 by further extending from the end portion of the uncoated portion 131. The second extension attachment portion 643 may further prevent (or mitigate) a short circuit according to deformation of the electrode substrates 510 and 420 of the negative electrode E51 and the positive electrode E42.

In addition, the second extension attachment portion 643 and the second length L2 may be on opposite sides of the electrode assembly 7 in the diameter direction and accordingly, the occurrence of cracks due to the thickness difference may be further prevented (or mitigated).

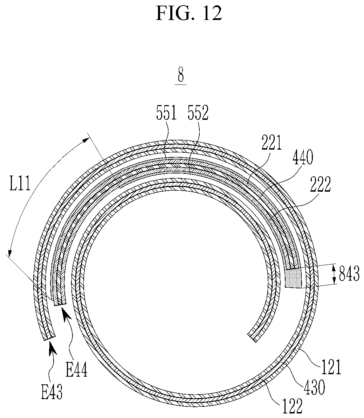

FIG. 12 is a partial cross-sectional view of the electrode assembly of a rechargeable battery according to a seventh embodiment of the present disclosure. Referring to FIG. 12, in the electrode assembly 8 of a rechargeable battery of the seventh embodiment, an electrode plate of a positive electrode E44 may include a first lamination tape 551 and a second lamination tape 552 attached to the starting point of the winding direction.

That is, the first lamination tape 551 may be attached to the first active material layer 221 and further extend from the end portion of the first active material layer 221. The second lamination tape 552 may be attached to the second active material layer 222 and further extend from the end portion of the second active material layer 222. The further extended first and second lamination tapes 551 and 552 may further include a first extension attachment portion 843 formed by being attached to each other.

The first extension attachment portion 843 of the first and second lamination tapes 551 and 552 attached to the first and second active material layers 221 and 222, respectively, may prevent (or at least mitigate) a short circuit according to deformation of electrode substrates 430 and 440 of a negative electrode E43 and the positive electrode E44.

The first lamination tape 551 may form the first attachment portion (external layer portion) located on the first active material layer 221 in a wound central portion of the electrode assembly 8, and the second lamination tape 552 may form the second attachment portion (internal layer portion) located on the second active material layer 222. The first lamination tape 551 is located outward in a radial direction and the second lamination tape 552 is located inward in a radial direction.

The end of the first attachment portion on the first active material layer 221 by the first lamination tape 551 and the end of the second attachment portion on the second active material layer 222 formed by the second lamination tape 552 are spaced apart from each other. The first attachment portion (i.e., outer side) formed by the first lamination tape 551 is longer than the second attachment portion (i.e., inner side) formed by the second lamination tape 552 by an eleventh length L11.

A difference of the eleventh length L11 may minimize (or at least reduce) a thickness difference in the diameter direction following winding due to the first and second lamination tapes 551 and 552, and accordingly, may prevent (or at least mitigate) the occurrence of cracks in the first and second active material layers 221 and 222 of the electrode assembly 8 after winding.

In addition, the first extension attachment portion 843 and the eleventh length L11 may be on opposite sides of the electrode assembly 8 in the diameter direction and accordingly, the occurrence of cracks due to the thickness difference may be further prevented (or at least mitigated).

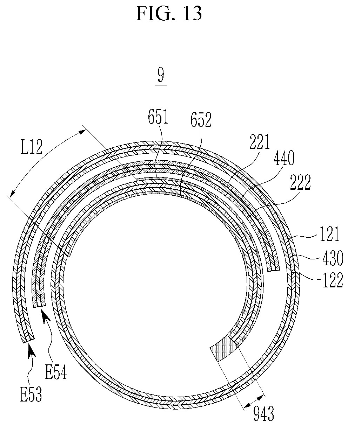

FIG. 13 is a partial cross-sectional view of the electrode assembly of a rechargeable battery according to an eighth embodiment of the present disclosure. Referring to FIG. 13, in the electrode assembly 9 of a rechargeable battery of the eighth embodiment, an electrode plate of a negative electrode E53 may include a first lamination tape 651 and a second lamination tape 652 attached to the starting point of the winding direction.

That is, the first lamination tape 651 may be attached to the first active material layer 121 and further extend from the end portion of the first active material layer 121. The second lamination tape 652 may be attached to the second active material layer 122 and further extend from the end portion of the second active material layer 122. The further extended first and second lamination tapes 651 and 652 may further include a second extension attachment portion 943 formed by being attached to each other.

The second extension attachment portion 943 of the first and second lamination tapes 651 and 652 attached to the first and second active material layers 121 and 122, respectively, may prevent (or at least mitigate) a short circuit according to deformation of the electrode substrates 430 and 440 of the negative electrode E53 and a positive electrode E54.

The first lamination tape 651 may form the first attachment portion (external layer portion) located on the first active material layer 121 in a wound central portion of the electrode assembly 9, and the second lamination tape 652 may form the second attachment portion (internal layer portion) located on the second active material layer 122. The first lamination tape 651 is located outward in a radial direction and the second lamination tape 652 is located inward in a radial direction.

The end of the first attachment portion on the first active material layer 121 formed by the first lamination tape 651 and the end of the second attachment portion on the second active material layer 122 formed by the second lamination tape 652 are spaced apart from each other. The first attachment portion (i.e., outer side) formed by the first lamination tape 651 may be formed shorter than the second attachment portion (i.e., inner side) formed by the second lamination tape 652 by a twelfth length L12.

A difference of the twelfth length L12 may minimize (or at least reduce) a thickness difference in the diameter direction following winding due to the first and second lamination tapes 651 and 652, and accordingly, may prevent (or at least mitigate) the occurrence of cracks in the first and second active material layers 121 and 122 of the electrode assembly 9 after winding.

In addition, the second extension attachment portion 943 and the twelfth length L12 may be on opposite sides of the electrode assembly 9 in the diameter direction and accordingly, the occurrence of cracks due to the thickness difference may be further prevented (or at least mitigated).

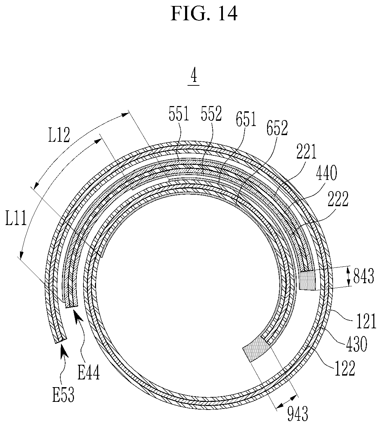

FIG. 14 is a partial cross-sectional view of the electrode assembly of a rechargeable battery according to a ninth embodiment of the present disclosure. Referring to FIG. 14, in the electrode assembly 4 of a rechargeable battery of the ninth embodiment, the electrode plate of the positive electrode E44 may include the first lamination tape 551 and the second lamination tape 552 attached to the starting point of the winding direction.

That is, the first lamination tape 551 may be attached to the first active material layer 221 and further extend from the end portion of the first active material layer 221. The second lamination tape 552 may be attached to the second active material layer 222 and further extend from the end portion of the second active material layer 222. The first and second lamination tapes 551 and 552 may further include the first extension attachment portion 843 by being attached to each other.

The first extension attachment portion 843 of the first and second lamination tapes 551 and 552 attached to the first and second active material layers 221 and 222, respectively, may prevent (or at least mitigate) a short circuit according to deformation of the electrode substrates 430 and 440 of the negative electrode E53 and the positive electrode E44.

The first lamination tape 551 may form the first attachment portion (external layer portion) located on the first active material layer 221 in a wound central portion of the electrode assembly 4, and the second lamination tape 552 may form the second attachment portion (internal layer portion) located on the second active material layer 222. The first lamination tape 551 is located outward in a radial direction and the second lamination tape 552 is located inward in a radial direction.

The end of the first attachment portion on the first active material layer 221 formed by the first lamination tape 551 and the end of the second attachment portion on the second active material layer 222 formed by the second lamination tape 552 are spaced apart from each other. The first attachment portion (i.e., outer side) formed by the first lamination tape 551 is longer than the second attachment portion (i.e., inner side) formed by the second lamination tape 552 by the eleventh length L11.

The eleventh length L11 may minimize (or at least reduce) a thickness difference caused in the diameter direction following winding due to the first and second lamination tapes 551 and 552, and accordingly, may prevent (or at least mitigate) the occurrence of cracks in the first and second active material layers 221 and 222 of the electrode assembly 4 after winding.

In addition, the first extension attachment portion 843 and the eleventh length L11 may be on opposite sides of the electrode assembly 4 in the diameter direction and accordingly, the occurrence of cracks due to the thickness difference may be further prevented (or at least mitigated).

In the electrode assembly 4 of a rechargeable battery of a ninth embodiment, the electrode plate of the negative electrode E53 may include the first lamination tape 651 and the second lamination tape 652 attached to the starting point of the winding direction.

That is, the first lamination tape 651 may be attached to the first active material layer 121 and further extend from the end portion of the first active material layer 121. The second lamination tape 652 may be attached to the second active material layer 122 and further extend from the end portion of the second active material layer 122. The first and second lamination tapes 651 and 652 may further include the second extension attachment portion 943 by being attached to each other.

The second extension attachment portion 943 of the first and second lamination tapes 651 and 652 attached to the first and second active material layers 121 and 122, respectively, may prevent (or at least mitigate) a short circuit according to deformation of the electrode substrates 430 and 440 of the negative electrode E53 and the positive electrode E44.

The first lamination tape 651 may form the first attachment portion (external layer portion) located on the first active material layer 121 in the wound central portion of the electrode assembly 4, and the second lamination tape 652 may form the second attachment portion (internal layer portion) located on the second active material layer 122. The first lamination tape 651 is located outward in a radial direction and the second lamination tape 652 is located inward in a radial direction.

The end of the first attachment portion on the first active material layer 121 formed by the first lamination tape 651 and the end of the second attachment portion on the second active material layer 122 formed by the second lamination tape 652 are spaced apart from each other. The first attachment portion (i.e., outer side) formed by the first lamination tape 651 may be shorter than the second attachment portion (i.e., inner side) formed by the second lamination tape 652 by the twelfth length L12.

The twelfth length L12 may minimize (or at least reduce) a thickness difference in the diameter direction following winding due to the first and second lamination tapes 651 and 652, and accordingly, may prevent (or at least mitigate) the occurrence of cracks in the first and second active material layers 121 and 122 of the electrode assembly 4 after winding.

In addition, the second extension attachment portion 943 and the twelfth length L12 may be on opposite sides of the electrode assembly 4 in the diameter direction and accordingly, the occurrence of cracks due to the thickness difference may be further prevented (or at least mitigated).

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

**Description of symbols**

| | | | |
|---|---|---|---|
| 1, 4, 5, 6, 7, 8, 9: | the electrode assembly | | |
| 121, 221: | first active material layer | | |
| 122, 222: | second active material layer | | |
| 131, 132: | uncoated portion | | |
| 410: | electrode substrate (negative electrode) | | |
| 420: | electrode substrate (the positive electrode) | | |
| 430, 440: | electrode substrate | 541: | first lamination tape |
| 542: | second lamination tape | 543: | extension attachment portion |
| 551: | first lamination tape | 552: | second lamination tape |
| 641: | first lamination tape | 642: | second lamination tape |
| 643: | extension attachment portion | 651: | first lamination tape |
| 652: | second lamination tape | 843: | extension attachment portion |
| 943: | extension attachment portion | | |
| E41: | negative electrode (electrode plate) | | |
| E42: | the positive electrode (electrode plate) | | |
| E43: | negative electrode | | |
| E44: | the positive electrode | E51: | negative electrode |
| E52: | the positive electrode | E53: | negative electrode |
| E54: | the positive electrode | L1: | first length |
| L2: | second length | L11: | eleventh length |
| L12: | twelfth length | S: | separator |
| T: | tab | | |

## Claims

1. An electrode assembly of a rechargeable battery, the electrode assembly comprising an electrode plate of a positive electrode, an electrode plate of a negative electrode, and a separator between the electrode plate of the positive electrode and the electrode plate of the negative electrode,
wherein each of the electrode plate of the positive electrode and the electrode plate of the negative electrode comprises:
an electrode substrate;
a first active material layer on a first surface of the electrode substrate; and
a second active material layer on a second surface of the electrode substrate,
wherein at least one of the electrode plate of the positive electrode and the electrode plate of the negative electrode further comprises lamination tapes attached to the first active material layer, an end portion of the electrode substrate, and the second active material layer,
wherein the lamination tapes form a first attachment portion located on the first active material layer and the second active material layer, respectively, in a wound central portion of the electrode assembly, and
wherein an end of the attachment portion on the first active material layer and an end of the attachment portion on the second active material layer are spaced apart from each other in a winding direction of the electrode assembly.

2. The electrode assembly as claimed in claim 1, wherein:
the electrode plate of the positive electrode comprises the lamination tapes including a first lamination tape and a second lamination tape;
the first lamination tape forms a first attachment portion located on the first active material layer of the electrode plate of the positive electrode in the wound central portion of the electrode assembly;
the second lamination tape forms a second attachment portion on the second active material layer of the electrode plate of the positive electrode in the wound central portion of the electrode assembly; and
the first attachment portion is longer than the second attachment portion by a first length.

3. The electrode assembly as claimed in claim 2, wherein:
the electrode substrate of the electrode plate of the positive electrode further comprises an uncoated portion;
the first lamination tape and the second lamination tape are attached to the uncoated portion,
the first lamination tape and the second lamination tape comprise a first extension attachment portion extending from an end portion of the uncoated portion; and
the first extension attachment portion does not correspond to an end portion of the first active material layer of the electrode plate of the negative electrode.

4. The electrode assembly as claimed in claim 3, wherein the first extension attachment portion and the first length are on opposite sides of the electrode assembly in a diameter direction.

5. The electrode assembly as claimed in any preceding claim, wherein:
the electrode plate of the negative electrode comprises the lamination tapes including a third lamination tape and a fourth lamination tape;
the third lamination tape forms a third attachment portion located on the first active material layer of the electrode plate of the negative electrode in the wound central portion of the electrode assembly;
the fourth lamination tape forms a fourth attachment portion located on the second active material layer of the electrode plate of the negative electrode in the wound central portion of the electrode assembly; and
the third attachment portion is shorter than the fourth attachment portion by a second length.

6. The electrode assembly as claimed in claim 5, wherein:
the electrode substrate of the electrode plate of the negative electrode further comprises an uncoated portion; and
the third lamination tape and the fourth lamination tape are attached to the uncoated portion, and
the third lamination tape and the fourth lamination tape comprise a second extension attachment portion extending from an end portion of the uncoated portion.

7. The electrode assembly as claimed in claim 6, wherein the second extension attachment portion and the second length are on opposite sides of the electrode assembly in a diameter direction.

8. The electrode assembly as claimed in claim 1, wherein:
both of the electrode plate of the positive electrode and the electrode plate of the negative electrode comprise the lamination tapes, the lamination tapes of the electrode plate of the positive electrode includes a first lamination tape and a second lamination tape, and the lamination tapes of the electrode plate of the negative electrode includes a third lamination tape and a fourth lamination tape;
the first lamination tape forms a first attachment portion located on the first active material layer of the electrode plate of the positive electrode in the wound central portion of the electrode assembly;
the second lamination tape forms a second attachment portion on the second active material layer of the electrode plate of the positive electrode in the wound central portion of the electrode assembly;
the first attachment portion is longer than the second attachment portion by a first length;
the third lamination tape forms a third attachment portion located on the first active material layer of the electrode plate of the negative electrode in the wound central portion of the electrode assembly;
the fourth lamination tape forms a fourth attachment portion located on the second active material layer of the electrode plate of the negative electrode in the wound central portion of the electrode assembly; and
the third attachment portion is shorter than the fourth attachment portion by a second length.

9. The electrode assembly as claimed in claim 8, wherein:
the electrode substrate of the electrode plate of the negative electrode further comprises an uncoated portion;
the third lamination tape and the fourth lamination tape are attached to the uncoated portion of the electrode substrate of the electrode plate of the negative electrode,
the third lamination tape and the fourth lamination tape comprise a second extension attachment portion extending from an end portion of the uncoated portion of the electrode substrate of the electrode plate of the negative electrode;
the first extension attachment portion and the second length are on opposite sides of the electrode assembly in a diameter direction;
the electrode substrate of the electrode plate of the positive electrode further comprises an uncoated portion;
the first lamination tape and the second lamination tape are attached to the uncoated portion of the electrode substrate of the electrode plate of the positive electrode,
the first lamination tape and the second lamination tape comprise a first extension attachment portion extending from the end portion of the uncoated portion of the electrode substrate of the electrode plate of the positive electrode; and
the first extension attachment portion and the second length are on opposite sides of the electrode assembly in the diameter direction.

10. The electrode assembly as claimed in claim 1, wherein:
the electrode plate of the positive electrode comprises the lamination tapes including a first lamination tape and a second lamination tape;
the electrode substrate, the first active material layer and the second active material layer of the electrode plate of the positive electrode have a same cross-section;
the first lamination tape forms a first attachment portion located on the first active material layer of the electrode plate of the positive electrode in the wound central portion of the electrode assembly;
the second lamination tape forms a second attachment portion on the second active material layer of the electrode plate of the positive electrode in the wound central portion of the electrode assembly; and
the first attachment portion is longer than the second attachment portion by an eleventh length.

11. The electrode assembly as claimed in claim 10, wherein:
the first lamination tape and the second lamination tape are attached to each other and further comprise a first extension attachment portion extending from an end portion of the first active material layer and the second active material layer; and
the first extension attachment portion and the eleventh length are on opposite sides of the electrode assembly in a diameter direction.

12. The electrode assembly as claimed in claim 1, wherein:
the electrode plate of the negative electrode comprises the lamination tapes including a third lamination tape and a fourth lamination tape;
the electrode substrate, the first active material layer, and the second active material layer of the electrode plate of the negative electrode have a same cross-section;
the third lamination tape forms a third attachment portion located on the first active material layer of the electrode plate of the negative electrode in the wound central portion of the electrode assembly;
the fourth lamination tape forms a fourth attachment portion located on the second active material layer of the electrode plate of the negative electrode in the wound central portion of the electrode assembly; and
the third attachment portion is shorter than the fourth attachment portion by a twelfth length.

13. The electrode assembly as claimed in claim 12, wherein:
the third lamination tape and the fourth lamination tape are attached to each other and further comprise a second extension attachment portion extending from an end portion of the first active material layer and the second active material layer; and
the second extension attachment portion and the twelfth length are on opposite sides of the electrode assembly in a diameter direction.

14. The electrode assembly as claimed in claim 1, wherein:
both of the electrode plate of the positive electrode and the electrode plate of the negative electrode comprise the lamination tapes, the lamination tapes of the electrode plate of the positive electrode includes a first lamination tape and a second lamination tape, and the lamination tapes of the electrode plate of the negative electrode includes a third lamination tape and a fourth lamination tape;
the electrode substrate, the first active material layer, and the second active material layer of the electrode plate of positive electrode have a same cross-section;
the first lamination tape forms a first attachment portion located on the first active material layer of the electrode plate of the positive electrode in the wound central portion of the electrode assembly;
the second lamination tape forms a second attachment portion on the second active material layer of the electrode plate of the positive electrode in the wound central portion of the electrode assembly;
the first attachment portion is longer than the second attachment portion by an eleventh length;
the electrode substrate, the first active material layer, and the second active material layer of the electrode plate of the negative electrode have a same cross-section;
the third lamination tape forms a third attachment portion located on the first active material layer of the electrode plate of the negative electrode in the wound central portion of the electrode assembly;
the fourth lamination tape forms a fourth attachment portion located on the second active material layer of the electrode plate of the negative electrode in the wound central portion of the electrode assembly; and
the third attachment portion is shorter than the fourth attachment portion by a twelfth length.

15. The electrode assembly as claimed in claim 14, wherein:
the first lamination tape and the second lamination tape are attached to each other and further comprise a first extension attachment portion extending from an end portion of the first active material layer and the second active material layer;
the first extension attachment portion and the eleventh length are on opposite sides of the electrode assembly in a diameter direction;
the third lamination tape and the fourth lamination tape are attached to each other and further comprise a second extension attachment portion extending from an end portion of the first active material layer and the second active material layer; and
the second extension attachment portion and the twelfth length are on opposite sides of the electrode assembly in the diameter direction.
